# EUROPEAN PATENT APPLICATION

(11) **EP 2 400 400 A1**
(43) Date of publication of application: **28.12.2011**
(21) Application number: 10006460.9
(22) Date of filing: 22.06.2010
(51) Int. Cl.: G06F 17/27, G06F 17/30

(54) **Semantic search engine using lexical functions and meaning-text criteria**

(71) Applicant: Inbenta Professional Services, S.L., 08017 Barcelona (ES)
(72) Inventor: Torras Mañá, Jordi, 08017 Barcelona (ES)
(74) Representative: Isern-Jara, Jaime

(57) **Abstract**

Semantic Search Engine using Lexical Functions and Meaning-Text Criteria, that outputs a response (R) as the result of a semantic matching process consisting in comparing a natural language query (Q) with a plurality of contents (C), formed of phrases or expressions obtained from a contents' database (6), and selecting the response (R) as being the contents corresponding to the comparison having a best semantic matching degree. It involves the transformation of the contents (C) and the query in individual words or groups of tokenized words (W1, W2), which are transformed in its turn into semantic representations (LSC1, LSC2) thereof, by applying the rules of Meaning Text Theory and through Lexical Functions, the said semantic representations (LSC1, LSC2) consisting each of a couple formed of a lemma (L) plus a semantic category (SC).

## Description

### Object of the Invention

The field of the present invention is that of Computational Linguistics.

The present invention relates to as semantic search engine, that outputs a response as the result of a matching process consisting in comparing a natural language query with a plurality of contents, formed of phrases or expressions obtained from a contents' database, and selecting the response as being the contents corresponding to the comparison having a best semantic matching degree.

More particularly, the present invention is aimed to a semantic search engine using so-called "Lexical Functions" and Meaning-Text Criteria (i.e.Meaning-Text Theory) to implement a search engine that matches user queries with content based in meaning instead of keywords, as it is performed in the conventional search engines.

### Background of the Invention. State-of-the-Art

Search engines use automated software programs so-called "spiders" to survey documents and build their databases. Documents are retrieved by these programs and analyzed. Data collected from each document are then added to the search engine index. When a user query is entered at a search engine site, the input is checked against the search engine's index of all documents it has analyzed. The best documents are then returned as hits, ranked in order with the best results at the top.

There are two primary methods of text searching: keyword search and natural language search.

Keyword searching is the most common way of text search. Most search engines do their text query and retrieval using keywords. This method achieves a very fast search, even with large amounts of data behind to search for and a fully automatic and autonomous indexing is made possible. But the fact that the search is based on forms (strings of characters) and not concepts or linguistic structures limits the effectiveness of the searches. One of the problems with keyword searching, for instance, is that it is difficult to specify the field or the subject of the search because the context of searched keywords is not taken into account. Ex. they have a drawback in distinguishing between polysemous words (i.e. words that are spelled the same way, but have a different meaning).

Most keyword search engines cannot return hits on keywords that mean the same, but are not actually entered in the user's query. A query on heart disease, for instance, would not return a document that used the word "cardiac" instead of "heart". Some search engines based on keywords use thesaurus or other linguistic resources to expand the number of forms to be searched, but the fact that this expansion is made keyword by keyword expansion, regardless of the context, causes combinations of keywords that completely change the original intention of the query. For example, from 'Heart + disease' the user could reach 'core + virus " and completely miss the topic of the search and get unrelated results,

Some search engines also have trouble with so-called stemming. For example, if you enter the word "fun," should the system return a hit on the word, "fund"? What about singular and plural words? What about verb tenses that differ from the word you entered by only an "s," or an "ed"?

Unlike keyword search systems, natural language-based search systems try to determine what you mean, not just what you say, by means of natural language processing. Both queries and document data are transformed into a predetermined linguistic (syntactic or semantic) structure. The resulting matching goes beyond finding similar shapes, and aims at finding similar core meanings.

These search engines transform samples of human language into more formal representations (usually as parse trees or first-order logic structures). To achieve this, many different resources that contain the required linguistic knowledge (lexical, morphological, syntactic, semantic ...) are used. The nerve center is usually a grammar (context-free, unrestricted, context sensitive, semantic grammar, etc...) which contains linguistic rules to create formal representations together with the knowledge found in the other resources.

Most natural language based search engines do their text query and retrieval by using syntactic representations and their subsequent semantic interpretation. The intention to embrace all aspects of a language, and being able to syntactically represent the whole set of structures of a language using different types of linguistic knowledge makes this type of systems extremely complex. Other search systems, among which the one of the present invention is included, choose to simplify this process, for example, by dismissing syntactic structure as the central part of the formal representation of the query. These streamlined processes are usually more effective especially when indexing large amounts of data from documents, but since these systems synthesize less information than a full natural language processing system, they also require refined matching algorithms to fill the resulting gap.

To summarize, it is to be said that up to this moment, most of the existing Natural Language searching software bases its analysis on the retrieval of "keywords", the syntactic structure of the phrases and the formal distribution of words in a phrase, to the detriment of semantics, something which does not allow meaning recognition.

The goal of the present invention is to provide a tools for effective recognition when it comes to retrieve actual and meaningful information when performing searching work.

### Explanation of the Invention

To such a goal, the object invention provides a new semantic search engine according to the characterizing part of claim 1.

In claims 2 to 12, different preferred features of the invention are disclosed.

In summary, the present invention provides for a meaning-based search engine for the enterprise that compares meanings and calculates their semantic coincidence. In short, the present invention uses a formal representation for queries (input) and content indexation based on meanings. The process of transforming natural language into this formal representation is carried out following the rules of the Meaning-Text theory and through Lexical Functions.

The calculation of the degree of overlap between the meaning of a query and the meanings of the indexed contents is done through a so called "Scored Coincidence algorithm", that takes several semantic factors into account to calculate such a degree.

### Brief description of the drawings

A detailed description of preferred, although not exclusive, embodiments of the semantic search engine that is the object of the invention is provided below, accompanied by drawings for the better understanding thereof, wherein embodiments of the present invention are illustrated by way of non-limiting example. In said drawings:
Fig.1 is a diagrammatical view showing the architecture of the system implementing the search engine of the present invention;
Fig. 2 is a representation of a entry or register of an example of Lexical Dictionary according to the present invention; and
Fig. 3 is a block diagram illustrating the workflow or algorithm of the matching and decision making process, according to the preferred embodiment of the present invention.

### Detailed Description of the Invention

The elements designated with numeral references correspond to the parts explained hereinafter.

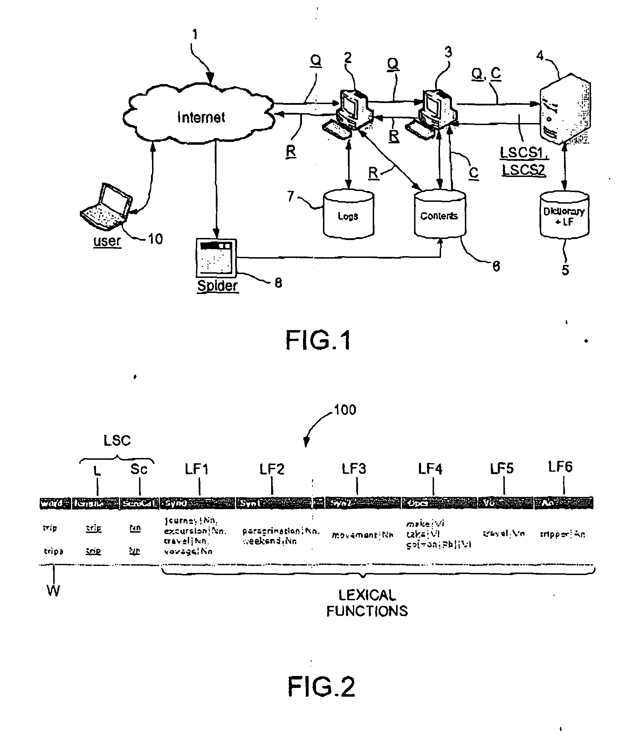

In Fig.1 a technical architecture diagram of the search engine of the present invention can be seen, wherein a user 10 is connected to internet 1 to achieve a response or result R to a natural language query Q, which is passed to first computer means 2 connected to second computer means 3, which communicates with a lexical server 4. The first computer 2 has a logs' database 7, which stores all the activity on the system, and is connected to an updatable contents' database 6, which in turn is accessible by the second computer means 3.

Second computer means 3 passes the query Q to the lexical server 4, which converts queries in natural language into semantic representations (LSC1) that combined as a sequence give a global semantic representation (LSCS1) of its meaning, by means of the rules of the Meaning-Text theory (MTT) and through lexical functions (LF), i.e. in sequences of pairs of lemmas L and semantic categories SC (sequences of LSC1 becoming a global semantic representation for all the query Q (LSCS1)), that are fed back to the second computer means 3, as it will be discussed shortly hereafter.

Database 6 contains categorized formal responses (which will work as visible outputs) and all their "content knowledge" (which is used to match input with the contents). The contents of the contents' database 6 will be indexed to have the same structure (sequences of pairs of lemmas L and semantic category SC (LSC2) becoming a global semantic representation LSCS2 ) as that of the global semantic representation (LSCS1) of the query Q. To do so, in the same manner as query Q is converted, second computer means 3 passes every contents C to the lexical server 4, which likewise converts contents in natural language into semantic representations (LSC2) that combined as a sequence give a global semantic representation (LSCS2) of its meaning, by means of the rules of the Meaning-Text theory (MTT) and through lexical functions (LF), i.e, in sequences of pairs of lemmas L and semantic categories SC (sequences of LSC2 becoming a global semantic representation for all the contents C (LSCS2)) that are also fed back to the second computer means 3 and indexed into database 6.

Second computer means 3 has a program that obtains the best response R for an input query Q on the basis of the global semantic representations (LSCS1 and LSCS2), provided by the lexical server 4.

Needless to say that, although it is not shown in Fig. 1, contents database 6 can be implemented in a file in a computer fiscally remote with respect to the server 4 and can be accessed, for example, through the internet or other WAN, LAN or the like.

Computer means 2, 3 can be implemented in a separate respective computer, or can be implemented in the same computer. Even computer means 2, 3 can be implemented in the lexical server 4.

The lexical server 4 has a dictionary and lexical functions (LF) database 5 consisting of a database with multiple registers 100, each composed of several fields, having an entry word; a semantic category of the word and a lemma of the entry word which are combined to formally represent the meaning of the word (LSC) ; and several syntagmatic and paradigmatic lexical functions associated to the meaning of the word (LSC), comprising at least as synonyms (syn0; syn1; syn2, ...); contraries; superlatives; adjectives associated to a noun; and verbs associated a noun. In Fig. 2, a representation of a entry or register of the dictionary and lexical functions (LF) database 5 according to the present invention, corresponding to the words "trip" (singular) and "trips" (plural). The entries are words W. In this case they have a common semantic representation (LSC) consisting of the same lemma L which is "trip", representing both "trip" and "trips", linked to the semantic category SC (SemCat in the representation of the entry) , in this case a "normal noun" (Nn).

Following the semantic representation of the meaning of the word (lemma L and semantic category SC (LSC)) different lexical functions LF, such as synonyms LF1, LF2, LF3; verbs associated to the noun LF4, LF5; adjectives associated to the entry noun LF6, and so on.

The dictionary and lexical functions (LF) database 5 is implemented in a database regularly updatable on a time basis and in function of the particular project.

The contents database 6 can also be linked to a software agent so-called in the field "spider" 8, so that the contents database 6 may be filled automatically by this software agent that collects pages from the websites.

The operation of the search engine is as follows. The semantic search engine returns to the user 10 a response R as the result of a matching process consisting in comparing the natural language query Q with a plurality of contents C, formed of phrases or expressions obtained from a contents' database 6, and selecting the response R as being the contents corresponding to the comparison having a best semantic matching degree. The main steps are:
● transforming the contents C into a global semantic representation (LSCS2) that gives the full meaning of the content C, by
   - tokenizing the contents C into individual words W2, and
   - transforming individual or groups of words W2 of the contents C into semantic representations consisting of pairs of lemma L plus a semantic category SC (LSC2), retrieved from the dictionary and lexical functions (LF) database 5.
   - applying lexical functions LF to the sequence of LSC2 representing the global meaning of the contents C, so called LSCS2, generating different versions of the global semantic representation (LSCS2), of the contents C,
● indexing the global semantic representations (LSCS2) of the contents C into Contents database 6,
● transforming the query Q into a global semantic representation (LSCS1) that gives the full meaning of the query Q, by
   - tokenizing the query Q into individual words W1, and
   - transforming individual or groups of words W1 of the query Q into semantic representations consisting of pairs of lemma L plus a semantic category SC (LSC1), retrieved from the dictionary and lexical functions (LF) database 5.
   - applying lexical functions LF to the sequence of LSC1 representing the global meaning of the query Q, so called LSCS1, generating different versions of the global semantic representation (LSCS1), of the query Q,
● calculating a semantic matching degree in a matching process, between a global semantic representation (LSCS1) of the query Q and a global semantic representation (LSCS2) of the indexed contents C, assigning a score,
and,
● retrieving the contents C which have the best matches (score) between their global semantic representation (LSCS2) and the query Q global semantic representation (LSCS1) from the database 6;

The process is repeated for every contents C in the contents database 6 to be analyzed and the response R is selected as being that having the best score, according to established criteria.

As it is been said before, the lemma L of the said semantic representations (LSC1, LSC2) of each individual or group of words (W1, W2) is obtained as the lemma field of the entry of the dictionary and lexical functions (LF) 5 corresponding to the individual or group of words (W1, W2); and. Likewise, the semantic category SC of the said semantic representations (LSC1, LSC2) is obtained as the semantic category field of the entry of the dictionary and lexical functions (LF) 5 corresponding to individual or group of words (W1, W2).

The input query Q is converted "on the fly" and the contents C are converted and indexed in a regular recurrence.

As it will be understood, the semantic search engine of the present invention enhances the possibilities of semantics and of lexical combinations, on the basis of the work carried out by I. Melcuk, within the frame of the Meaning-Text theory (MTT). The semantic search engine of the present invention is based on the theoretical principle that languages are defined by the way their elements are combined, is new theory states that it is the proper lexicon that imposes this combination and, therefore, we need to focus on the description of the lexical units and its semantics and not so much on a syntactic description (note that up to this moment, most of the existing Natural Language software bases its analysis on the syntactic structure of the phrases to the detriment of semantics, something which does not allow meaning recognition).

This Innovative tool based on the lexicon, allows the detection of phrases with the same meaning, even though they may be formally different. Most of the existing Natural Language software can barely detect these types of semantic similarities, even though they are very common, due to the fact that such software concentrates only on the form and syntax of the phrase. As a result, the Semantic Search Engine of the present invention is able to regroup any questions asked by the user, however different or complex they may be, and find the appropriate information and response.

Indeed, Lexical Functions LF (LF1, ... LF6, ...) are a tool specially designed to formally represent relations between lexical units, where what is calculated is the contributed value and not the sum of the meaning of each element, since a sum might bring about an error in an automatic text analysis. The matching process is based in this principle not to sum up meanings but calculating contributed values to the whole meaning of the query Q and each of the contents C (or each candidate to be a result)

Lexical Functions, therefore, allow us to formalize and describe in a relatively simple manner the complex lexical relationship network that languages present and assign a corresponding semantic weight to each element in the phrase. Most importantly, however, they allow us to relate analogous meanings no matter which form they are presented in.

Indeed, natural languages are more restrictive than they may seem at first glance. Consequently, in the majority of the cases, we encounter fixed expressions sooner or later. Although these have varying degrees of rigidity, ultimately they are fixed, and must be described according to this characteristic, for example:
*Obtain* a *result*
*Do a favour*
Ask *a question*
Raise a *building*

All of these examples show us that it is the lexicon that imposes selection restrictions since we would hardly find "do a question" or "raise a favour" in a text.

Actually, the most important factor when analyzing these phrases is that, from the meaning point of view, the elements do not have the same semantic value. As shown in the examples provided before, the first element hardly provides any information, but all of the meaning or semantic weight is provided by the second element.

The crucial matter here is that the semantic relationship between the first and second element is exactly the same in every example. Roughly, what we are saying is "make X" (a result, a joke, a favour, a question, a building). This type of relation can be represented by the "Oper" lexical function (LF4 in Fig. 2).

"Syn0" (lexical function LF1), "syn1" (lexical function LF2), "syn..n" for synonyms at a distance n (see Fig. 1); "cont" for contrary, "super" for superlatives, are all examples of lexical functions. Lexical Functions are used to define semantic connections between elements and provide meaning expansion (synonyms, hyperonyms, hyponyms...) or meaning transformation (merging sequences of elements into a unique meaning or assigning semantic weight to each element).

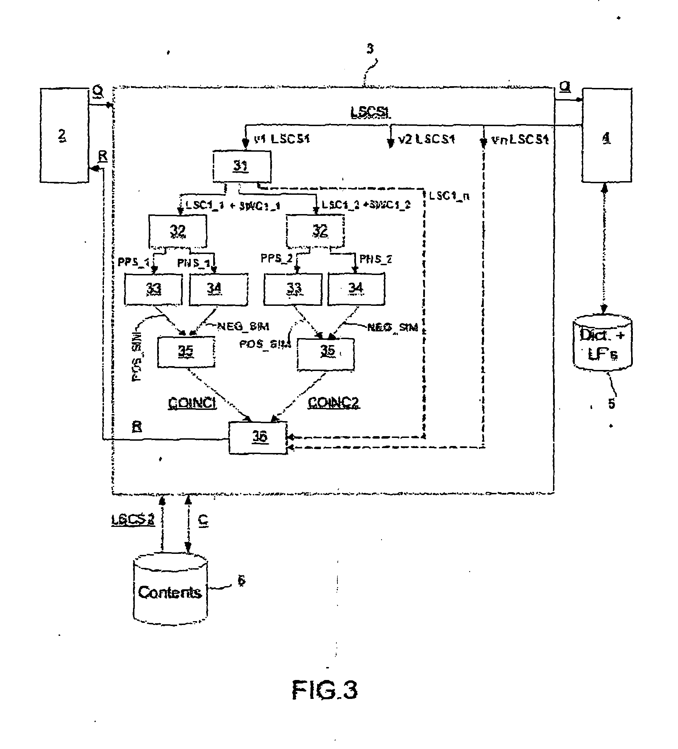

Turning back to the matching process of aforesaid step 5, the same is performed through a *scored coincidence algorithm,* which is illustrated in Fig. 3, it will be better understood after the short explanation that follows of the indexation process of the database 6 contents.
- The "content knowledge" of the database 6 is to be understood as the sum of values from each content C, The number, attributes and functionalities of these contents C are predefined for every single project and they characterize the way in which every content C will be indexed. Every content C has two attributes related to the score process:
   *Linguistic Type*: defines the kind of data that the content C must contain and the way to calculate the coincidence between the query Q and the content C.
   *Rel*: Factor (from 1 to 0) that represents the reliability of the nature of the matching for that content in particular (this factor points, for example, the difference between finding a match in the title of the content and finding a match in the body of the content).

Once the contents C are defined, they may be filled with natural language phrases or expressions for in order to get a robust content knowledge. This process can be automatic (through the spider 8) or manual. The indexation of the contents C comprises the storage of the linguistic type, the REL factor and the global semantic representation (LSCS2) of its natural language phrases or expressions. The indexation of the global semantic representation (LSCS2) comprises a semantic weight calculated for each semantic representation (LSC2) in computer 3:
for each semantic representations (LSC2) of the global semantic representation of the contents C (LSCS2),
   ● assigning a category index (ICAT) that is proportional to semantic category (SC) importance,
   ● calculating of a semantic weight (SWC2) of the semantic representation (LSC2) of the global semantic representation of the contents C (LSCS2),, by dividing its category index (ICAT) by the sum of category indexes of all semantic representation (LSC2) of the global semantic representation of the contents C (LSCS2)

As said, each content C has a linguistic type and a REL factor associated that are stored with the indexed global semantic representation (LSCS2) of the natural language phrases or expressions. Content C linguistic type, REL and global semantic representation (LSCS2) are stored into memory to provide faster responses.

As to the calculation of the said semantic matching degree in a matching process, a said *Scored Coincidence Algorithm* is used by the computer 3 to find the best matches between the input and the content knowledge on contents database 6: searches and calculates the semantic coincidence between the query Q and the contents C in order to get a list of scored matches. It subsequently values the formal similarity between these matches to get a list of completed scored matches

An example of such an *Scored Coincidence Algorithm* is shown in Fig. 3.

After the said sequence of semantic representations (LSC1) that gives a global semantic representation of the query Q (LSCS1), and having stored in contents database 6 the contents C indexation (comprising the global semantic representations (LSCS2), the linguistic type and the REL factor) the matching process will try to match the global semantic representation (LSCS1) of the query Q with the global semantic representation (LSCS2) of the contents C through, the following semantic coincidence algorithm, performed in the computer 3:
- for each semantic representation (LSC1) of the global semantic representation of the query Q (LSCS1),
- assigning a category index (ICAT) that is proportional to semantic category (SC) importance,
- calculation in block 31 of a semantic weight (SWC1) of the semantic representation (LSC1) of the global semantic representation of the query Q (LSCS1), by dividing its category index (ICAT) by the sum of category indexes of all semantic representations (LSC1) of the global semantic representation of the query Q (LSCS1)

The process is run for every single semantic representation (LSC1) of the global semantic representation of the query Q (LSCS1),

Then, for each semantic representation (LSC1) of the global semantic representation of the query Q (LSGS1),

if its lemma (L) and semantic category (SC) combination (LSC1) matches a semantic representation (LSC2) of the global semantic representation of the contents C (LSCS2),or a lexical function (LF1, LF2, LF3, ...) of the semantic representation (LSC2) of the global semantic representation of the contents C (LSCS2), in a register 100 of the dictionary (5), then calculate in block 32, a partial positive similarity as PPS = SWC1 x SAF, being SAF a Semantic Approximation Factor varying between 0 and 1, accounting for the semantic distance between LSC1 and the LSC2 or the LSC2's Lexical functions (LF) matched. SAF allows to point the difference between matching the same meaning (LSC1 = LSC2 where SAF = 1) or matching a lexical function of the meaning (LSC1 = LSC2's LFn where SAF = factor attached to the Lexical Function type). In Fig. 3, two PPS outputs from block 31 are shown (PPS1 and PPS2), and

if the semantic representation (LSC1) doesn't match any semantic representation (LSC2) of the global semantic representation of the contents C (LSCS2),or a lexical function (LF1, LF2. LF3, ...) of the semantic representation (LSC2) of the global semantic representation of the contents C (LSCS2 then calculate a partial positive similarity as PPS = 0.

After that, in block 33 a Total Positive Similarity (POS_SIM) is calculated as the sum of all the aforesaid partial positives similarities (PPS) of the global semantic representation (LSCS1) of the query (Q) .

Subsequently, for every semantic representation (LSC2) of the global semantic representation of the contents C (LSCS2) that did not contribute to the total Positive Similarity (POS_SIM), then calculate a partial negative similarity as PNS = semantic weight (SWC2) of the LSC2 with no correspondence in LSCS1.

A Total Negative Similarity (NEG_SIM) is calculated in block 34 as the sum of all the aforesaid partial negative similarities (PNS) of the global semantic representation (LSCS2) of the contents (C).

In block 35, a semantic coincidence score (COING1; COINC2) is calculated in a way that depends on the linguistic type of the content (C). For linguistic type = phrase a semantic coincidence score (COINS1; COINC2) is calculated as the difference between the Total Positive Similarity (POS_SIM) and Total Negative Similarity (NEG_SIM). For linguistic type = freetext a semantic coincidence score (COINC1; COINC2) is calculated by taking the same value than the Total Positive Similarity (POS_SIM).

In block 36, the semantic matching degree between the query Q and a content C is calculated for each coincidence (COINC1: COINC2) between the global semantic representation of the query Q (LSCS1) and the global semantic representation of the content C (LSCS2), as the coincidence (COINC1; COINC2) for the REL factor (reliability of the matching) of content C. Actually, in block 36 a different decision making process can be performed, other than the one explained.

The response (R) to the query (Q) is selected as the contents (C) having the higher semantic matching degree, response (R) is outputted from computer means 3 to computer means 2, as it is shown in Figs. 1 and 3.

As it can be seen, the score of the semantic matching degree of each match will be represented by a number between 0 (no coincidence found between query and content knowledge) and 1 (perfect match between query and content knowledge). All the scores within this range show an objective proportion of fitting between the query and the content.

The way in which this objectiveness is embodied into the final output varies depending on the projects. Every single project has its expectation level: which quality should the results have and how many of them should be part of the output. This desirable expected output can be shaped by applying the "static settings" on the computer means 3 and the "maximum number of results" on the computer means 2.

## Claims

1. Semantic search engine, that outputs a response (R) as the result of a semantic matching process consisting in comparing a natural language query (Q) with a plurality of contents (C), formed of phrases or expressions obtained from a contents' database (6), and selecting the response (R) as being the contents corresponding to the comparison having a best semantic matching degree, **characterised in that** it comprises the following steps:
● transforming the said contents (C) into a global semantic representation (LSCS2) that gives the full meaning of the content (C), by
- tokenizing the contents (C) into individual words (W2), and
- transforming individual or groups of words (W2) of the contents C into semantic representations consisting of pairs of lemma (L) plus a semantic category SC (LSC2), retrieved from the dictionary and lexical functions (LF) database (5).
- applying lexical functions (LF) to the sequence of (LSC2) representing the contents' global meaning (LSCS2), generating different versions of the global semantic representation (LSCS2), of the contents (C),
● indexing the global semantic representations (LSCS2) of the contents (C into contents database (6)
● transforming the query (Q) into a global semantic representation (LSCS1) that gives the full meaning of the query (Q), by
- tokenizing the query (Q) into individual words (W1), and
- transforming individual or groups of words (W1) of the query (Q) into semantic representations consisting (LSC1) of pairs of lemma (L) plus a semantic category (SC), retrieved from the dictionary and lexical functions (LF) database (5).
- applying lexical functions (LF) to the sequence of (LSC1) representing the global meaning of the query (Q), so called (LSCS1), generating different versions of the global semantic representation (LSCS1), of the query (Q),
and;
● calculating a semantic matching degree in a matching process, between a global semantic representation (LSCS1) of the query (Q) and a global semantic representation (LSCS2) of the indexed contents (C), assigning a score.
● retrieving the contents (C) which have the best matches (score) between their global semantic representation (LSCS2) and the query (Q) global semantic representation (LSCS1) from the database (6).

2. Semantic search engine, according to claim 1, **characterized in that** the said transformations of individual or groups of tokenized words (W1, W2), both of the query (Q) and of the contents (C), into semantic representations (LSC1, LSC2) thereof, are performed by applying the rules of Meaning Text Theory and through Lexical Functions, the said semantic representations (LSC1, LSC2) consisting each of a couple formed of a lemma (L) plus a semantic category (SC).

3. Semantic search engine, according to claim 2, **characterized in that** it comprises a dictionary and lexical functions (LF) database (5) consisting of a database with multiple registers (100), each composed of several fields: an entry word (W), a semantic category (SC) and a lemma (L) of the entry word which are combined to formally represent the meaning of the word (LSC); and several syntagmatic and paradigmatic lexical functions (LF1 - LF6) associated to the meaning of the word (LSC), comprising at least a synonyms (syn0; syn1; syn2, ...); contraries; superlatives; adjectives associated to a noun; and verbs associated a noun.

4. Semantic search engine, according to claim 3, **characterized in that** the said dictionary (5) is implemented in a database regularly updatable on a time basis and on a project-basis.

5. Semantic search engine, according to claim 1, **characterized in that** the said matching process for calculating the semantic matching degree between the query (Q) and a contents (C) comprises,
- for each semantic representation (LSC1) of the global semantic representation of the query Q (LSCS1),
- assigning a category index (ICAT) that is proportional to semantic category (SC) importance,
- calculation of a semantic weight (SWC1) of the semantic representation (LSC1) of the global semantic representation (LSCS1) of the query (Q), by dividing its category index (ICAT) by the sum of category indexes of all semantic representations (LSC1) of the global semantic representation (LSCS1) of the query (Q),
- for each semantic representations (LSC2) of the global semantic representation (LSCS2) of the contents (C),
- assigning a category index (ICAT) that is proportional to semantic category (SC) importance,
- calculation of a semantic weight (SWC2) of the semantic representation (LSC2) of-the global semantic representation (LSCS2) of the contents (C), by dividing its category index (ICAT) by the sum of category indexes of all semantic representation (LSC2) of the global semantic representation (LSCS2) of the contents C.

6. Semantic search engine, according to claim 5, **characterized in that** for each semantic representation (LSC1) of the global semantic representation of the query Q (LSCS1),
if its lemma (L) and semantic category (SC) combination (LSC1) matches a semantic representation (LSC2) of the global semantic representation (LSCS2) of the contents (C), or a lexical function (LF1, LF2, LF3, ...) of the semantic representation (LSC2) of the global semantic representation (LSCS2) of the contents (C), in a register (100) of the dictionary (5), then calculate, in block 32, a partial positive similarity as PPS = SWC1 x SAF, being SAF a Semantic Approximation Factor varying between 0 and 1, accounting for the semantic distance between LSC1 and the LSC2 or the LF of the LSC2 matched, the said SAF allowing to point the difference between matching the same meaning (LSC1 = LSC2 where SAF = 1) or matching a lexical function of the meaning (LSC1 = LSC2's LFn where SAF = factor attached to the Lexical Function type), and
if the semantic representation (LSC1) doesn't match any semantic representation (LSC2) of the global semantic representation of the contents C (LSCS2), or a lexical function (LF1. LF2, LF3, ...) of the semantic representation (LSC2) of the global semantic representation (LSCS2) of the contents (C), then calculate a partial positive similarity as PPS = 0.

7. Semantic search engine, according to claim 6, **characterized in that** a Total Positive Similarity (POS_SIM) is calculated, in block 33, as the sum of all the aforesaid partial positives similarities (PPS) of the global semantic representation (LSCS1) of the query (Q).

8. Semantic search engine, according to claim 7, **characterized in that** for every semantic representation (LSC2) of the global semantic representation (LSCS2) of the contents (C) that did not contribute to the total Positive Similarity (POS_SIM), then calculate, at block 32, a partial negative similarity as PNS = semantic weight (SWC2) of the semantic representation (LSC2) of the global semantic representation (LSCS2) of the contents (C).

9. Semantic search engine, according to claim 8, **characterized in that** a Total Negative Similarity (NEG_SIM) is calculated, at block 34, as the sum of all the aforesaid partial negative similarities (PNS) of the global semantic representation (LSCS2) of the contents (C).

10. Semantic search engine, according to claim 9, **characterized in that** for each content (C) a coincidence score (COINC1; COINC2) is calculated, at block 35, as the difference between the Total Positive Similarity (POS_SIM) and Total Negative Similarity (NEG_SIM) when the linguistic type for the content C is phrase, and
calculated taking Total Positive Similarity (POS_SIM) value as the coincidence score (COINC1; COINC2) when the linguistic type for the content (C) is free text.

11. Semantic search engine, according to claim 10, **characterized in that**, in block 36, a semantic matching degree between the query (Q) and a content (C) is calculated for each coincidence (COINC1; COINC2) between the global semantic representation of the query Q (LSCS1) and the global semantic representation (LSCS2) of the content (C), as the coincidence (COINC1; COINC2) for the REL factor (reliability of the matching) of content (C).

12. Semantic search engine, according to claim 11, **characterized in that** the response (R) to the query (Q) is selected as the content (C) having the higher semantic matching degree.

## Amended claims

### Amended claims in accordance with Rule 137(2) EPC.

**1.** Semantic search method, that outputs a response (R) as the result of a semantic matching process consisting in comparing a natural language query (Q) with a plurality of contents (C), formed of phrases or expressions obtained from a contents' database (6), and selecting the response (R) as being the content corresponding to the comparison having a best semantic matching degree, **characterised in that** it comprises the following steps:
• transforming the said contents (C) into a global semantic representation (LSCS2) that gives the full meaning of the content (C), by
- tokenizing the contents (C) into individual words (W2), and
- transforming individual or groups of words (W2) of the contents C into semantic representations (LSC2) consisting of pairs of lemma (L) plus a semantic category SC, retrieved from the dictionary and lexical functions (LF) database (5).
- applying lexical functions (LF) to the pairs of (LSC2), thus generating different versions of the global semantic representation (LSCS2), of the contents (C),
• indexing the global semantic representations (LSCS2) of the contents (C into contents database (6)
• transforming the query (Q) into a global semantic representation (LSCS1) that gives the full meaning of the query (Q), by
- tokenizing the query (Q) into individual words (W1), and
- transforming individual or groups of words (W1) of the query (Q) into semantic representations (LSC1) consisting of pairs of lemma (L) plus a semantic category (SC), retrieved from the dictionary and lexical function (LF) database (5).
- applying lexical functions (LF) to the sequence of (LSC1), thus generating different versions of the global semantic representation (LSCS1), of the query (Q),
and;
• calculating a semantic matching degree in a matching process, between a global semantic representation (LSCS1) of the query (Q) and a global semantic representation (LSCS2) of the indexed contents (C), assigning a score.
• retrieving the contents (C) which have the best matches (score) between their global semantic representation (LSCS2) and the query (Q) global semantic representation (LSCS1) from the database (6).

**2.** Semantic search method, according to claim 1, **characterized in that** it comprises a dictionary and lexical functions (LF) database (5) consisting of a database with multiple registers (100), each composed of several fields: an entry word (W): a semantic category (SC) and a lemma (L) of the entry word which are combined to formally represent the meaning of the word (LSC); and several syntagmatic and paradigmatic lexical functions (LF1 - LF6) associated to the meaning of the word (LSC), comprising at least a synonyms (syn0; syn1; syn2, ...); contraries; superlatives; adjectives associated to a noun; and verbs associated a noun.

**3.** Semantic search method, according to claim 2, **characterized in that** the said dictionary (5) is implemented in a database regularly updatable on a time basis and on a project-basis.

**4.** Semantic search method, according to claim 1, **characterized in that** the said matching process for calculating the Semantic matching degree between the query (Q) and a contents (C) comprises,
- for each semantic representation (LSC1) of the global semantic representation of the query Q (LSCS1).
- assigning a category index (ICAT) that is proportional to semantic category (SC) importance,
- calculation of a semantic weight (SWC1) of the semantic representation (LSC1) of the global semantic representation (LSCS1) of the query (Q), by dividing its category index (ICAT) by the sum of category indexes of all semantic representations (LSC1) of the global semantic representation (LSCS1) of the query (Q),
- for each semantic representations (LSC2) of the global semantic representation (LSCS2) of the contents (C),
- assigning a category index (ICAT) that is proportional to semantic category (SC) importance,
- calculation of a semantic weight (SWC2) of the semantic representation (LSC2) of the global semantic representation (LSCS2) of the contents (C), by dividing its category index (ICAT) by the sum of category indexes of all semantic representation (LSC2) of the global semantic representation (LSCS2) of the contents C.

**5.** Semantic search method, according to claim 4, **characterized in that** for each semantic representation (LSC1) of the global semantic representation of the query Q (LSCS1),
if its lemma (L) and semantic category (SC) combination (LSC1) matches a semantic representation (LSC2) of the global semantic representation (LSCS2) of the contents (C), or a lexical function (LF1, LF2, LF3, ...) of the semantic representation (LSC2) of the global semantic representation (LSCS2) of the contents (C), in a register (100) of the dictionary (5), then calculate, in block 32, a partial positive similarity as PPS = SWC1 x SAF, being SAF a Semantic Approximation Factor varying between 0 and 1, accounting for the semantic distance between LSC1 and the LSC2 or the LF of the LSC2 matched, the said SAF allowing to point the difference between matching the same meaning (LSC1 = LSC2 where SAF = 1) or matching a lexical function of the meaning (LSC1 = LSC2's LFn where SAF = factor attached to the Lexical Function type), and
if the semantic representation (LSC1) doesn't match any semantic representation (LSC2) of the global semantic representation of the contents C (LSCS2), or a lexical function (LF1, LF2, LF3, ...) of the semantic representation (LSC2) of the global semantic representation (LSCS2) of the contents (C), then calculate a partial positive similarity as PPS = 0.

**6.** Semantic search method, according to claim 5, **characterized in that** a Total Positive Similarity (POS_SIM) is calculated, in block 33, as the sum of all the aforesaid partial positives similarities (PPS) of the global semantic representation (LSCS1) of the query (Q).

**7.** Semantic search method, according to claim 6, **characterized in that** for every semantic representation (LSC2) of the global semantic representation (LSCS2) of the contents (C) that did not contribute to the total Positive Similarity (POS_SIM), then calculate, at block 32, a partial negative similarity as.PNS = semantic weight (SWC2) of the semantic representation (LSC2) of the global semantic representation (LSCS2) of the contents (C).

**8.** Semantic search method, according to claim 7, **characterized in that** a Total Negative Similarity (NEG_SIM) is calculated, at block 34, as the sum of all the aforesaid partial negative similarities (PNS) of the global semantic representation (LSCS2) of the contents (C).

**9.** Semantic search method, according to claim 8, **characterized in that** for each content (C) a coincidence score (COINC1; COINC2) is calculated, at block 35, as the difference between the Total Positive Similarity (POS_SIM) and Total Negative Similarity (NEG_SIM) when the linguistic type for the content C is phrase, and as the Total Positive Similarity (POS_SIM) when the linguistic type for the content (C) is free text.

**10.** Semantic search method, according to claim 9, **characterized in that**, in block 36, a semantic matching degree between the query (Q) and a content (C) is calculated for each coincidence (CONC1: COINC2) between the global semantic representation of the query Q (LSCS1) and the global semantic representation (LSCS2) of the content (C), as the coincidence (COINC1; COINC2) for the REL factor (reliability of the matching) of content (C).

**11.** Semantic search method, according to claim 10, **characterized in that** the response (R) to the query (Q) is selected as the content (C) having the higher semantic matching degree.
